(19) Europäisches Patentamt
European Patent Office
Office européen des brevets

(11) EP 4 769 292 A1

(12) EUROPEAN PATENT APPLICATION
published in accordance with Art. 153(4) EPC

(43) Date of publication:
01.07.2026 Bulletin 2026/27

(21) Application number: 24909749.4

(22) Date of filing: 31.07.2024

(51) International Patent Classification (IPC):
G06T 5/00 (2024.01)    G06V 20/69 (2022.01)

(52) Cooperative Patent Classification (CPC):
G06N 3/042; G06N 3/0464; G06N 3/08;
G06T 3/4053; G06T 5/00; G06T 5/60; G06T 5/70;
G06V 20/69

(86) International application number:
PCT/CN2024/108951

(87) International publication number:
WO 2025/138795 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.12.2023 CN 202311839953

(71) Applicant: Institute of Biophysics, Chinese
Academy of
Sciences
Beijing 100101 (CN)

(72) Inventors:
• XU, Pingyong
  Beijing 100101 (CN)
• YUAN, Lin
  Beijing 100101 (CN)
• HE, Wenting
  Beijing 100101 (CN)
• XUE, Fudong
  Beijing 100101 (CN)

(74) Representative: Chung, Hoi Kan
Mandarin IP Limited
7 Cherry Trees
Great Shelford
Cambridge CB22 5XA (GB)

(54) **DECONVOLUTION-BASED SUPER-RESOLUTION IMAGING METHOD AND APPARATUS BY MEANS OF DEEP LEARNING-BASED DENOISING, AND MEDIUM**

(57) The present disclosure relates to the technical field of biological microscopic imaging. Disclosed are a deconvolution-based super-resolution imaging method and apparatus by means of deep learning-based denoising, and a medium. The method comprises: acquiring an image to be denoised having a target imaging structure thereof marked by a fluorescent molecule; using a preset image denoising neural network to denoise the image to be denoised to obtain a denoised image, wherein a training data set for training the network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps an emission spectrum of the photoswitchable fluorescent molecule; and performing deconvolution processing on the denoised image to obtain a super-resolution image. According to the present disclosure, a large-scale and high-quality ground truth image is obtained by using the photoswitching characteristic of the photoswitchable fluorescent molecule, thereby enhancing the denoising effect of the image denoising neural network; the image is denoised by using the network, and then deconvolution is performed on the denoised image, thereby achieving single-frame super-resolution imaging for live cells over a large field of view.

FIG. 1

**Description**

CROSS-REFERENCE TO RELATED APPLICATIONS

The present application claims priority to Chinese Patent Application No. 202311839953.2, filed on December 28, 2023 with the China National Intellectual Property Administration, and entitled "DECONVOLUTION-BASED SUPER-RESOLUTION IMAGING METHOD AND APPARATUS BY MEANS OF DEEP LEARNING-BASED DENOISING, AND MEDIUM", the entire contents of which are incorporated in the present application by reference.

TECHNICAL FIELD

The present disclosure relates to the technical field of biological microscopic imaging, and in particular to a deconvolution-based super-resolution imaging method and apparatus by means of deep learning-based denoising, an electronic device and a computer-readable storage medium.

BACKGROUND

Super-resolution imaging technology refers to a process of processing a low-resolution image into a high-resolution image by means of a computer algorithm or model, which enables us to observe more details and obtain a clearer and more realistic visual experience. In recent years, various super-resolution imaging technologies, such as stimulated emission depletion microscopy (STED), stochastic optical reconstruction microscopy (STORM), photoactivated localization microscopy (PALM), have broken through the constraint of the optical diffraction limit, allowing researchers to study the fine features of subcellular structures in cells at the nanoscale resolution level.

However, these imaging methods are generally multi-frame super-resolution imaging technologies, that is, they utilize different spatial information exhibited by samples in time sequences and achieve spatial resolution by sacrificing temporal resolution, making it difficult to achieve single-frame super-resolution imaging. For example, structured illumination microscopy (SIM), the most suitable super-resolution imaging for live cells also requires at least 9 frames of raw data to reconstruct one ultra-high-resolution image. In addition to the defect of achieving spatial resolution by sacrificing temporal resolution, the aforementioned various super-resolution imaging technologies are also prone to generating reconstruction artifacts caused by the rapid movement of molecules to be observed. Furthermore, multi-frame sampling easily leads to bleaching of fluorescent molecules, making 3D super-resolution imaging of live cells face great challenges. Therefore, it is of great significance to develop a large field-of-view single-frame super-resolution imaging technology without sacrificing temporal resolution.

SUMMARY

In view of the above situation, a deconvolution-based super-resolution imaging method and apparatus by means of deep learning-based denoising, an electronic device and a computer-readable storage medium are provided according to the embodiments of the present disclosure, aiming to solve or at least partially solve the above-mentioned problems.

In a first aspect, a deconvolution-based super-resolution imaging method by means of deep learning-based denoising is provided according to an embodiment of the present disclosure. The method comprises:

acquiring an image to be denoised having a target imaging structure thereof marked by a fluorescent molecule;
using a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps with an emission spectrum of the photoswitchable fluorescent molecule; and
performing deconvolution processing on the denoised image to obtain a super-resolution image corresponding to the denoised image.

In a second aspect, a deconvolution-based super-resolution imaging apparatus by means of deep learning-based denoising is further provided according to an embodiment of the present disclosure. The apparatus comprises:

an acquisition module, configured to acquire an image to be denoised having a target imaging structure thereof marked by a fluorescent molecule;
a denoising module, configured to use a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps with an emission spectrum of the photoswitchable fluorescent molecule;

a super-resolution imaging module, configured to perform deconvolution processing on the denoised image to obtain a super-resolution image corresponding to the denoised image.

In a third aspect, an electronic device is further provided according to an embodiment of the present disclosure. The electronic device comprises a processor; and a memory configured to store computer-executable instructions. The executable instructions, when executed, cause the processor to perform the steps of the above deconvolution-based super-resolution imaging method by means of deep learning-based denoising.

In a fourth aspect, a computer-readable storage medium is further provided according to an embodiment of the present disclosure. One or more programs are stored on the computer-readable storage medium. The one or more programs, when executed by an electronic device comprising a plurality of application programs, cause the electronic device to perform the steps of the above deconvolution-based super-resolution imaging method by means of deep learning-based denoising.

By means of the above technical solutions, a deconvolution-based super-resolution imaging method and apparatus by means of deep learning-based denoising, and a medium are provided according to the embodiments of the present disclosure. The deconvolution processing is performed on a denoised image to obtain a super-resolution image corresponding to the denoised image. The denoised image is an image processed by a preset image denoising neural network. A training data set for the preset image denoising neural network is generated by using the photoswitching characteristic of a photoswitchable fluorescent molecule. By using the characteristic, a large-scale, high-quality ground truth image with extremely low noise, which is more in line with the true image, can be acquired, which offers substantial advantages especially for deep tissue imaging. Training a network with a training data set containing the ground truth image can significantly enhance the robustness and stability of the preset image denoising neural network. Meanwhile, given that the photoswitchable fluorescent molecule can bind to various subcellular structures without being dependent on any specific structure, it is not required that the target imaging structure of the image to be denoised is the same as or similar to the target imaging structure in the training data set. Instead, the preset image denoising neural network can be applied to denoise the image to be denoised only if the emission spectrum of the fluorescent molecule overlaps with that of the photoswitchable fluorescent molecule. Therefore, the preset image denoising neural network has high versatility and universality, thereby greatly enhancing the denoising effect of the network and resulting in the denoised image with extremely low noise. Subsequent deconvolution processing on the denoised image enables the reversal and restoration of the convolution phenomenon inherent to optical microscopes, which enhances the spatial and temporal resolution of the image and yields the fully restored original image, that is, the super-resolution image corresponding to the denoised image. This achieves large field-of-view single-frame super-resolution imaging, and solves the defects inherent in the multi-frame super-resolution imaging method in the prior art.

## BRIEF DESCRIPTION OF DRAWINGS

The drawings described herein are intended to provide further understanding of the present disclosure and constitute a part of the present disclosure. Exemplary embodiments of the present disclosure and the description thereof are used for explaining the present disclosure rather than limiting the present disclosure. In the drawings:

FIG. 1 is a flowchart of a deconvolution-based super-resolution imaging method by means of deep learning-based denoising according to an embodiment of the present disclosure;
FIG. 2 is a flowchart of a deconvolution-based super-resolution imaging method by means of deep learning-based denoising according to another embodiment of the present disclosure;
FIG. 3 is a timing diagram of laser modulation according to an embodiment of the present disclosure;
FIG. 4 is a comparison diagram of image processing results between direct deconvolution without denoising and deconvolution after denoising according to an embodiment of the present disclosure;
FIG. 5 is a schematic structural diagram of a deconvolution-based super-resolution imaging apparatus by means of deep learning-based denoising according to an embodiment of the present disclosure;
FIG. 6 is a schematic structural diagram of an electronic device according to an embodiment of the present disclosure.

## DETAILED DESCRIPTION OF THE EMBODIMENTS

To make the purpose, technical solutions and beneficial effects of the present disclosure clearer, the technical solutions in the present disclosure will be clearly and completely described hereinafter with reference to the drawings in the embodiments according to the present disclosure. It is apparent that the described embodiments are only some embodiments rather than all embodiments of the present disclosure. All the other embodiments obtained by a person of ordinary skills in the art based on the embodiments of the present disclosure without any creative effort shall fall within the protection scope of the present disclosure.

It should be noted that similar numerals and signs in the following figures represent similar objects. Hence, an item defined for a figure may not be further defined and explained for subsequent figures.

It should be noted that the terms such as "first", "second" and the like in the description, the claims and the drawings of the present disclosure are only used to distinguish similar objects, rather than describe a particular or chronological order. It should be understood that the terms used herein may be exchanged as appropriate, such that the embodiments of the present disclosure described herein can be implemented in an order other than the order shown or described herein. In addition, the term "comprise" and variations thereof are to be construed to mean "comprise but not limited to" open-ended terms.

As described above, conventional imaging methods are generally multi-frame super-resolution imaging technologies, that is, they utilize different spatial information exhibited by samples in time sequences and achieve spatial resolution by sacrificing temporal resolution, making it difficult to achieve single-frame super-resolution imaging. For example, structured illumination microscopy (SIM), the most suitable super-resolution imaging for live cells also requires at least 9 frames of raw data to reconstruct one ultra-high-resolution image. In addition to the defect of achieving spatial resolution by sacrificing temporal resolution, the aforementioned various super-resolution imaging technologies are also prone to generating reconstruction artifacts caused by the rapid movement of molecules to be observed. Furthermore, multi-frame sampling easily leads to bleaching of fluorescent molecules, making 3D super-resolution imaging of live cells face great challenges. Therefore, it is of great significance to develop a large field-of-view single-frame super-resolution imaging technology without sacrificing temporal resolution.

Based on this, according to an embodiment of the present disclosure, the deconvolution processing is performed on a denoised image to obtain a super-resolution image corresponding to the denoised image. The denoised image is an image processed by a preset image denoising neural network. A training data set for the preset image denoising neural network is generated by using the photoswitching characteristic of a photoswitchable fluorescent molecule. By using the characteristic, a large-scale, high-quality ground truth image with extremely low noise, which is more in line with the true image, can be acquired, which offers substantial advantages especially for deep tissue imaging. Training a network with a training data set containing the ground truth image can significantly enhance the robustness and stability of the preset image denoising neural network. Meanwhile, given that the photoswitchable fluorescent molecule can bind to various subcellular structures without being dependent on any specific structure, it is not required that the target imaging structure of the image to be denoised is the same as or similar to the target imaging structure in the training data set. Instead, the preset image denoising neural network can be applied to denoise the image to be denoised only if the emission spectrum of the fluorescent molecule overlaps with that of the photoswitchable fluorescent molecule. Therefore, the preset image denoising neural network has high versatility and universality, thereby greatly enhancing the denoising effect of the network and resulting in the denoised image with extremely low noise. Subsequent deconvolution processing on the denoised image enables the reversal and restoration of the convolution phenomenon inherent to optical microscopes, which enhances the spatial and temporal resolution of the image and yields the fully restored original image, that is, the super-resolution image corresponding to the denoised image. This achieves large field-of-view single-frame super-resolution imaging, and solves the defects inherent in the multi-frame super-resolution imaging method in the prior art.

To facilitate understanding the present disclosure, a deconvolution-based super-resolution imaging method by means of deep learning-based denoising in the embodiments of the present disclosure is first illustrated in detail. The executing subject of the deconvolution-based super-resolution imaging method by means of deep learning-based denoising according to the embodiments of the present disclosure is generally a computer device with a certain computing capability. The computer device includes, for example, a terminal device, a server or other processing devices. The terminal device may be user equipment (UE), a mobile device, a user terminal, a terminal, a personal digital assistant (PDA), a computing device, a wearable device and the like. In some possible implementations, the deconvolution-based super-resolution imaging method by means of deep learning-based denoising may be implemented by a processor invoking computer-readable instructions stored in a memory.

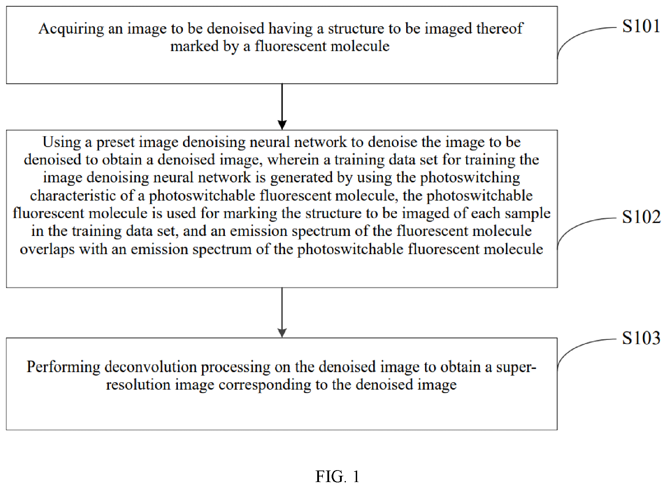

FIG. 1 is a flowchart of a deconvolution-based super-resolution imaging method by means of deep learning-based denoising according to an embodiment of the present disclosure. As shown in FIG. 1, the method at least includes steps S101 to S103.

In step S101, an image to be denoised having a target imaging structure thereof marked by a fluorescent molecule is acquired.

In this step, the target imaging structure of the image to be denoised is a cellular structure observed by a fluorescence microscope, including but not limited to an endoplasmic reticulum, mitochondria, centrosome, Golgi apparatus, the morphology of cell nucleolus, ribosomes, lysosomes, and the like. The fluorescent molecules include ordinary fluorescent molecules and photoswitchable fluorescent molecules with photoswitching characteristics.

In step S102, a preset image denoising neural network is used to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps an emission spectrum of the photoswitchable fluorescent molecule.

It is found that the deep learning-based method can learn complex image features and noise distribution patterns by constructing deep learning models and using large-scale training data and parallel computing capabilities, thereby achieving efficient noise removal. The deep learning learns directly from input images to output images by means of an end-to-end training mode, which reduces dependence on manual feature design and improves the robustness and generalization ability of an algorithm. The method by means of deep learning-based denoising also has other advantages. For example, the deep learning model can automatically adjust network parameters and learning strategies according to different characteristics and noise types of input images to achieve adaptive denoising for different types of noise. Through multi-layer nonlinear transformation, the deep learning model can model the complex relationship between images and noise, so as to better capture details and texture information in images. It can utilize context information in images, namely the spatial and intensity correlations around pixels, to recover the details and structures in images more accurately. Finally, the deep learning model can also introduce more hidden layers and parameters by increasing the network depth and width, thereby improving the expression ability and denoising performance of the model. In summary, the method by means of deep learning-based denoising has strong learning ability and adaptability, can better recover the details and structures in images, and improve the quality and clarity of images.

However, in an actual application scenario, such as the technical field of biological microscopic imaging, the deep learning-based denoising method requires a large number of ground truth images for training, while it is relatively difficult to acquire large-scale, high-quality ground truth images. In addition, the network model of the deep learning method is usually trained based on specific data sets. When applying the trained network model, the image content to be processed needs to be the same as or similar to the image content in the training data set, thus resulting in poor robustness, low versatility and universality of the trained neural network model. Furthermore, many deep learning methods introduce translation invariance during the denoising process, that is, insensitivity to the translation of the input image. This may lead to blurring or distortion in the denoising results. The deep learning method is extremely sensitive to perturbations of input data, even minor perturbations may cause significant changes in the output results. In denoising tasks, the input image may contain some subtle noise, which may cause the deep learning method to fail to remove noise accurately. In conclusion, the deep learning denoising method needs to develop more effective data augmentation techniques to improve the quality and quantity of ground truth images, and introduce more prior knowledge to improve the robustness, versatility of the model, so as to achieve a better denoising effect. Based on this, in this step, after the image to be denoised is acquired, a preset image denoising neural network can be used to denoise the image to be denoised to obtain a denoised image. Herein, the preset image denoising neural network may be a deep learning network model, and a training data set for training the image denoising neural network is generated by using the photoswitching characteristic of the photoswitchable fluorescent molecule. The photoswitchable fluorescent molecule refers to a molecule that can undergo reversible changes in structure and properties under light stimulation. Specifically, the photoswitchable fluorescent molecule can achieve switching between the bright state and the dark state under different light conditions, that is, under irradiation at a specific wavelength, the photoswitchable fluorescent molecule is in the "on" state, namely the bright or luminescent state; and under irradiation of another specific wavelength, the photoswitchable fluorescent molecule is in the "off" state, namely the dark or non-luminescent state.

In step S103, deconvolution processing is performed on the denoised image to obtain a super-resolution image corresponding to the denoised image.

After the denoised image is acquired, the deconvolution processing can be performed on a denoised image to obtain a super-resolution image corresponding to the denoised image. In an implementation, for example, deconvolution processing may be performed on the denoised image by means of direct deconvolution to obtain the corresponding super-resolution image. Alternatively, deconvolution processing may also be performed on the denoised image by means of iterative deconvolution to obtain the denoised image. The way of deconvolution processing is not limited in the embodiment of the present disclosure.

As can be seen from the method shown in FIG. 1, a deconvolution-based super-resolution imaging method by means of deep learning-based denoising is innovatively proposed according to an embodiment of the present disclosure. The deconvolution processing is performed on a denoised image to obtain a super-resolution image corresponding to the denoised image. The denoised image is an image processed by a preset image denoising neural network. A training data set for the preset image denoising neural network is generated by using the photoswitching characteristic of a photoswitchable fluorescent molecule. By using the characteristic, a large-scale, high-quality ground truth image with extremely low noise, which is more in line with the true image, can be acquired, which offers substantial advantages especially for deep tissue imaging. Training a network with a training data set containing the ground truth image can significantly enhance the robustness and stability of the preset image denoising neural network. Meanwhile, given that the photoswitchable fluorescent molecule can bind to various subcellular structures without being dependent on any specific structure, it is not required that the target imaging structure of the image to be denoised is the same as or similar to the target imaging structure in the training data set. Instead, the preset image denoising neural network can be applied to denoise the image to be denoised only if the emission spectrum of the fluorescent molecule overlaps with that of the photoswitchable fluorescent molecule. Therefore, the preset image denoising neural network has high versatility and universality, thereby greatly enhancing the denoising effect of the network and resulting in the denoised image with extremely low noise. Subsequent deconvolution processing on the denoised image enables the reversal and restoration of the convolution phenomenon inherent to optical microscopes, which enhances the spatial and temporal resolution of the image and yields the fully restored original image, that is, the super-resolution image corresponding to the denoised image. This achieves large field-of-view single-frame super-resolution imaging, and solves the defects inherent in the multi-frame super-resolution imaging method in the prior art.

Further, to better illustrate the process of the above deconvolution-based super-resolution imaging method by means of deep learning-based denoising, as a detailed elaboration and extension of the above embodiments, the embodiments of the present application provide several alternative embodiments, but are not limited thereto, as specifically described below.

In an embodiment, the image to be denoised is determined by means of the following manner A1/manner A2/manner A3.

In manner A1, an original image is acquired and used as the image to be denoised, wherein the original image is acquired by camera sampling.

In manner A2, preprocessing is performed on the original image, and the acquired processed image is used as the image to be denoised, wherein the preprocessing method comprises optical lock-in amplification algorithm processing, Gaussian filtering processing, mean filtering processing, Wiener filtering processing or deconvolution processing, or the like.

In manner A3, the acquired target super-resolution image is used as the image to be denoised, wherein the target super-resolution image comprises an Airyscan super-resolution image, an ISM super-resolution image, an A-POD super-resolution image or an MSSR super-resolution image, or the like.

In this embodiment, for manner A2, preprocessing may be performed on the original image acquired by camera sampling, and the acquired processed image is used as the image to be denoised. Exemplarily, optical lock-in amplification algorithm processing may be performed on the original image 1 to obtain the processed image 1, which is used as the image to be denoised. Gaussian filtering processing may also be performed on the original image 2 to obtain the processed image 2, which is used as the image to be denoised. Mean filtering processing may also be performed on the original image 3 to obtain the processed image 3, which is used as the image to be denoised. Wiener filtering processing may also be performed on the original image 4 to obtain the processed image 4, which is used as the image to be denoised. Deconvolution processing may also be performed on the original image 5 to obtain the processed image 5, which is used as the image to be denoised. It should be noted that the exemplary embodiments are merely illustrative and do not limit the embodiments of the present disclosure.

For manner A3, the image 1 acquired by using the Airyscan super-resolution imaging technology may be used as the image to be denoised. The image 2 acquired by using the ISM super-resolution imaging technology may also be used as the image to be denoised. The image 3 acquired by using the A-POD super-resolution imaging technology may also be used as the image to be denoised. The image 4 acquired by using the MSSR super-resolution imaging technology may also be used as the image to be denoised. It should be noted that the exemplary embodiments are merely illustrative and do not limit the embodiments of the present disclosure.

In an embodiment, the fluorescent molecule marks the target imaging structure in the image to be denoised in the following manner B1/manner B2.

In manner B1, the fluorescent molecule marks the target imaging structure in the image to be denoised by means of molecular cloning.

In manner B2, the fluorescent molecule marks the target imaging structure in the image to be denoised by binding with a target antibody, wherein the target antibody specifically binds to the target imaging structure in the image to be denoised.

In this embodiment, the type of the target antibody may be a conventional antibody and a nanobody. Exemplarily, the fluorescent molecule A can be used for fusion expression with the target imaging structure (referring to the construction of a fusion gene by linking an exogenous protein gene to the 3' end of another gene for expression) by means of the molecular cloning method (a method for purifying and amplifying specific DNA fragments at the molecular level) to mark the target imaging structure. The target imaging structure may also be marked by binding the fluorescent molecule B with nanobody A, wherein the target antibody A specifically binds to the target imaging structure. It should be noted that the exemplary embodiments are merely illustrative and do not limit the embodiments of the present disclosure. In an embodiment, in step S102, the photoswitchable fluorescent molecule comprises a fluorescent protein with photoswitching properties, a fluorescent dye or quantum dots with photoswitching properties.

In this embodiment, with respect to the fluorescent protein with photoswitching properties, specifically, in an embodiment, the fluorescent protein with photoswitching properties responds to light modulation, has two states of a bright state and a dark state, and comprises a photoswitchable fluorescent protein, a reversibly photoswitchable fluorescent protein, and a photo-blinking fluorescent protein. In an embodiment, the photoswitchable fluorescent protein comprises Skylan-S, rsEGFP2, Dronpa, or the like. Herein, Skylan-S (a novel photoswitching protein) is a monomer that can be used for live-cell imaging and has extremely high optical stability and switching characteristics. rsEGFP2 (reversibly switchable enhanced green fluorescent protein 2) has characteristics of easy crystallization and excellent optical characteristics. Dronpa (an erasable optical protein) is a monomeric fluorescent protein derived from Pectiniidae (a type of stony coral), which has a distinctive photochromic property, and can be controlled to turn fluorescence on and off by two different excitation lights.

For the fluorescent dye with photoswitching properties, specifically, in an embodiment, the fluorescent dye with photoswitching properties comprises a photoswitchable dye and a photo-blinking fluorescent dye. In an implementation, the fluorescent dye with photoswitching properties may be, for example, fluorescein, a cyanine dye, a rhodamine fluorescent dye, or the like. It should be noted that the types of the fluorescent protein with photoswitching properties and the fluorescent dye with photoswitching properties are not limited in the embodiment of the present disclosure.

The quantum dots, also known as semiconductor nanocrystals, can confine electrons within an extremely tiny three-dimensional space, thereby restricting electron movement. Applying a certain electric field or light irradiation to them will cause them to emit light of a specific frequency. The luminescence frequency varies with the change in particle size. Thus, the color of the emitted light can be controlled by adjusting the size of quantum dots.

In an embodiment, the types of light emitted by the photoswitchable fluorescent molecule comprise blue light, green light, yellow light, red light or far infrared wavelength light, or the like. The types of light emitted by the photoswitchable fluorescent molecule are not limited in the embodiment of the present disclosure.

In an embodiment, in step S102, the preset image denoising neural network is generated according to the following steps.

In step C1, a plurality of fluorescence image sequences are acquired, wherein each of the plurality of fluorescence image sequences comprises one or more bright state images and one or more dark state images.

In step C2, first image processing is performed on the one or more bright state images and the one or more dark state images to obtain an input image of the plurality of fluorescence image sequences.

In step C3, second image processing is performed on the one or more bright state images and the one or more dark state images to obtain a ground truth image of the plurality of fluorescence image sequences, wherein a signal-to-noise ratio of the input image is less than a signal-to-noise ratio of the ground truth image.

In step C4, the training data set is generated based on each input image and each ground truth image; and an initial image denoising neural network is trained by using the training data set to obtain the preset image denoising neural network.

In this embodiment, obtain the preset image denoising neural network, the training data set may be acquired first. Particularly, a plurality of fluorescence image sequences may be acquired first. Specifically, in an embodiment, the fluorescence image sequences are acquired by an optical imaging technology, and the optical imaging technology comprises: wide-field fluorescence microscopic imaging technology, confocal fluorescence microscopic imaging technology, structured illumination imaging technology, single-molecule localization microscopic imaging technology, stimulated emission depletion super-resolution microscopic imaging technology, optical fluctuation super-resolution imaging technology, single-photon fluorescence imaging technology, two-photon microscopic imaging technology, multi-photon microscopic imaging technology or photoacoustic imaging technology, or the like.

For example, after marking the target imaging structure by the photoswitchable fluorescent molecule, the target imaging structure may be irradiated by the modulated light. When the photoswitchable fluorescent molecule is in a luminescent state, the fluorescence images can be collected by using an optical imaging device, such as a wide-field fluorescence microscope, to obtain one or more bright-state images. Since the target imaging structure is marked by the photoswitchable fluorescent molecule, each bright state image contains signal data and noise data generated by the target imaging structure, wherein the noise data comprises Gaussian noise, Poisson noise, sample autofluorescence, and the like. When most of the photoswitchable fluorescent molecules are in a non-luminescent state, the fluorescence images are collected to obtain one or more dark state images, each dark state image contains weak signal data and noise data. Finally, a plurality of fluorescence image sequences can be acquired, such as fluorescence image sequence a: bright state image a1, dark state image a2; fluorescence image sequence b: bright state image b1, bright state image b2, dark state image b3; fluorescence image sequence c: bright state image c1, bright state image c2, dark state image c3, dark state image c4. The number of fluorescence image sequences can be set according to actual requirements, which is not limited in the embodiment of the present disclosure. For example, the number can be set to 500. The optical imaging technologies used to acquire the fluorescence image sequence can be selected according to actual requirements, which is not limited in the embodiment of the present disclosure.

After the plurality of fluorescence image sequences are acquired, first image processing may be performed on the one or more bright state images and the one or more dark state images to obtain an input image of the fluorescence image sequences. Specifically, in an embodiment, after the plurality of fluorescence image sequences are acquired, first image processing is performed on the one or more bright state images and the one or more dark state images to obtain an input image of the plurality of fluorescence image sequences by means of the following manner D1/manner D2.

In manner D1, any one of the bright state images is used as the input image.

In manner D2, an arbitrary set of first fluorescence image pairs is selected from the plurality of fluorescence image sequences, the dark state image is subtracted from the bright state image in the first fluorescence image pairs to obtain a first subtracted image; and the first subtracted image is used as the input image.

In this embodiment, for manner D1, any one of the bright state images may be used as the input image. Exemplarily, the plurality of fluorescence image sequences include bright state image 1, bright state image 2, and bright state image 3, and any one of bright state image 1, bright state image 2, and bright state image 3 may be selected, for example, selecting bright state image 1 as the input image. It should be noted that the exemplary embodiments are merely illustrative and do not limit the embodiments of the present disclosure.

For manner D2, an arbitrary set of first fluorescence image pairs may be selected from the plurality of fluorescence image sequences, the dark state image is subtracted from the bright state image in the first fluorescence image pairs to obtain a first subtracted image; and the first subtracted image is used as the input image. Exemplarily, the plurality of fluorescence image sequences includes fluorescence image sequence d and fluorescence image sequence e. The fluorescence image sequence d includes bright state image d1, bright state image d2, bright state image d3, and dark state image d4. The fluorescence image sequence e includes bright state image e1, bright state image e2, and dark state image e3. An arbitrary set of first fluorescence image pairs may be selected from the sequences. For example, the first fluorescence image pair comprises the bright state image d1 and the dark state image e1. The pixel values of the corresponding pixel points between the bright state image d1 and the dark state image e1 may be subtracted to obtain a first subtracted image, which can be used as the input image. It should be noted that the exemplary embodiments are merely illustrative and are not intended to limit the embodiments of the present disclosure.

Next, second image processing can be performed on the one or more bright state images and the one or more dark state images to obtain a ground truth image of the plurality of fluorescence image sequences, wherein a signal-to-noise ratio of the input image is less than a signal-to-noise ratio of the ground truth image. Specifically, in an embodiment, after the plurality of fluorescence image sequences are acquired, second image processing is performed on the one or more bright state images and the one or more dark state images to obtain a ground truth image of the plurality of fluorescence image sequences by means of the following manner E1/manner E2.

In manner E1, for any multiple sets of second fluorescence image pairs in the plurality of fluorescence image sequences, the dark state image is subtracted from the bright state image in each of the second fluorescence image pairs to obtain a second subtracted image; and the ground truth image is generated based on the second subtracted image.

In manner E2, the plurality of fluorescence image sequences is processed by using an optical lock-in amplification algorithm to obtain the ground truth image.

In this embodiment, for manner E1, for any multiple sets of second fluorescence image pairs in the plurality of fluorescence image sequences, the pixel values of the corresponding pixel points between the bright state image and the dark state image in each of the second fluorescence image pairs may be subtracted to obtain a second subtracted image, and then the ground truth image is generated based on the second subtracted image. Exemplarily, the plurality of fluorescence image sequences comprises fluorescence image sequence f and fluorescence image sequence g. For the fluorescence image sequence f, the pixel values of the corresponding pixel points between the bright state image f1 and the dark state image f2 in the fluorescence image sequence f may be subtracted to obtain the second subtracted image 1. For the fluorescence image sequence g, the pixel values of the corresponding pixel points between the bright state image g1 and the dark state image g3 in the fluorescence image sequence g may be subtracted to obtain the second subtracted image 2. Then, weighted average processing may be performed on each second subtracted image to obtain a ground truth image. For example, the weights of the second subtracted images 1 and 2 may both be set to 1/2, and then the ground truth image = 1/2 × second subtracted image 1 + 1/2 × second subtracted image 2. The weight of the second subtracted image may be set according to actual requirements, which is not limited in the embodiment of the present disclosure. It should be noted that the exemplary embodiments are merely illustrative and do not limit the embodiments of the present disclosure.

For manner E2, exemplarily, the fluorescence image sequence h, the fluorescence image sequence i, the fluorescence image sequence j, and the fluorescence image sequence k may be processed by using an optical lock-in amplification algorithm (OLID algorithm) to obtain the ground truth image. It should be noted that the exemplary embodiments are merely illustrative and do not limit the embodiments of the present disclosure.

Then, the training data set may be generated based on each input image and each ground truth image. In a specific implementation, for example, an image acquisition device can be used to capture 1000 frames of images. Assuming that one input image and one ground truth image can be generated according to 20 fluorescence image sequences, the 1000 frames of images can first be divided into fluorescence image sequence group 1, fluorescence image sequence group 2, ..., fluorescence image sequence group 50 in the order of acquisition. Input image 1 and ground truth image 1 can be generated according to the fluorescence image sequence group 1, input image 2 and ground truth image 2 can be generated according to the fluorescence image sequence group 2, ..., input image 50 and ground truth image 50 may be generated according to the fluorescence image sequence group 50. The input image and the truth image form one training pair, and the 50 training pairs constitute the training data set.

After the training data set is acquired, an initial image denoising neural network can be trained by using the training data set to obtain the preset image denoising neural network. In a specific application, in an embodiment, a deep learning model on which the initial image denoising neural network is based comprises: a supervised model, an unsupervised model or a self-supervised model, or the like; wherein the supervised model comprises a DnCNN model or a Noise2Clean model, or the like; the unsupervised model comprises a BM3D model or a BM4D model, or the like; the self-supervised model comprises a Deep CAD model, a Deep CAD-RT model, a Noise2Noise model, a Noise2Void model, a Self2Self model, a Self2Self+ model, a Neighbor2Neighbor model, a Noise2Fast model, a Dilated Blind-Spot Network model, a blind2unblind model or a Deep Image Prior model, or the like.

Herein, the denoising convolutional neural network model (DnCNN) is a deep residual network specially designed for image denoising, which learns the noise features in an image by stacking multiple convolutional layers and residual connections, and removes noise.

The block matching 3D model (BM3D) can perform simple denoising by means of original image matching to generate a basic estimation, and then perform finer denoising by means of an original image and the basic estimation to further improve the peak signal-to-noise ratio. The block matching 4D filtering model (BM4D model) is similar to the principle of the BM3D model, and can extend 2D spatial denoising to 3D space.

The self-supervised deep learning model (DeepCAD) does not require any high signal-to-noise ratio observed images, and can realize network training only by using a single low signal-to-noise ratio calcium imaging sequence, which can suppress detection noise, and improve the signal-to-noise ratio by more than 10 times. A self-supervised deep learning model for real-time noise suppression (DeepCAD-RT) has significant advantages in functional imaging. The Noise2Noise uses paired noise images of the same scene as training image pairs, and can achieve the same training effect as that under supervised conditions. The Noise2Void model can use noise images themselves as supervision, and prevent the learning of identity mapping through a blind spot network. A self-supervised learning-based single image denoising network model (Self2Self model) only requires inputting a single noise image (without ground truth) for training. The Self2Self + model is an optimized version of the Self2Self model. The Neighbor2Neighbor model is proposed based on the Noise2Noise model, it replaces noisy-clean image pairs with noisy-noisy image pairs, thereby solving the problem of collecting a large number of noisy-clean image data pairs. The self-supervised image denoising model with visible blind spots (blind2unblind) can overcome the information loss in a blind spot-driven denoising method. The dilated blind-spot network (D-BSN) can learn a denoising model only from real noisy images. The deep image prior model is an image denoising method proposed based on the principle that the neural network itself inherently contains implicit prior information in its structure.

In an implementation, the image denoising neural network to be trained may also be generated based on other deep learning models, which is not limited in the embodiment of the present disclosure. For example, the image denoising neural network to be trained may also be generated based on a Recorrupted2Recorrupted model or the like.

In this embodiment, the training data set may be trained by using the initial image denoising neural network generated based on the above deep learning model, and the deep learning model can efficiently remove various types of noise during the imaging process, such as Gaussian noise, Poisson noise, and the like, thereby greatly enhancing the denoising effect of the preset image denoising neural network.

In an implementation, each input image in the training sample set can be input to the initial image denoising neural network to obtain a plurality of predicted images. Then, based on the preset loss function, the parameters in the initial image denoising neural network are updated according to the plurality of predicted images and the corresponding ground truth images to obtain the preset image denoising neural network.

In an embodiment, the performing deconvolution processing on the denoised image to obtain a super-resolution image corresponding to the denoised image specifically comprises: step F: performing deconvolution processing on the denoised image based on the Richardson-Lucy algorithm to obtain the super-resolution image corresponding to the denoised image.

It has been found that, for blurred images with no noise at all, the original image can be completely restored by using the Richardson-Lucy (RL) deconvolution method. However, in actual imaging processes, due to the influence of uncertain factors such as optical system noise and point spread function (PSF), the RL deconvolution algorithm often results in a large number of artifacts in the image. Moreover, as the number of deconvolution iterations increases, the noise signal may be amplified, and the deconvolution may further bring more artifacts to the image.

Based on this, in this embodiment, deconvolution processing may be performed on the denoised image based on the Richardson-Lucy algorithm to obtain the super-resolution image corresponding to the denoised image. Since the denoised image is an image processed by the preset image denoising neural network, the training data set used for the preset image denoising neural network is acquired by using the photoswitching characteristic of the photoswitchable fluorescent molecule, the preset image denoising neural network has high robustness, stability, versatility, thereby greatly enhancing the denoising effect. Thus, the denoised image has extremely low noise. Therefore, processing deconvolution on the denoised image by using the RL algorithm enables the acquisition of a fully restored original image, improves the spatiotemporal resolution of the image, and thereby achieves the purpose of single-frame super-resolution imaging.

In an implementation, the system point spread function can be determined according to the following formula (1):

$$PSF(\rho) = I_0 \left[ \frac{2J_1\left(\frac{2\pi}{\lambda}NA\rho\right)}{\frac{2\pi}{\lambda}NA\rho} \right]^2 \qquad (1);$$

wherein $I_0$ is a normalization coefficient, $J_1$ is the Bessel function of the first kind, $\lambda$ is the wavelength, NA denotes the numerical aperture, and $\rho$ denotes the polar distance in a polar coordinate system. When the fluorescence emitted by the sample passes through the optical system, due to the effect of diffraction, the image formed on the camera is the convolution of the fluorescence emitted by the sample and the system point spread function. Therefore, to better conform to the diffraction process of the optical system, the Bessel function of the first kind can be used to represent the system point spread function.

Considering the influence of noise in imaging, an excessive number of deconvolution iterations may generate artifacts, while an insufficient number fails to improve image resolution effectively. Therefore, the number of deconvolution iterations can be determined based on the quality of the denoised image. Specifically, the number of iterations may be determined by calculating the Fourier Ring Correlation (FRC) resolution of two consecutive frames of images in the actual sample, so as to ensure that the image resolution is maximized and no obvious reconstruction artifacts are present.

Specifically, in an embodiment, the imaging object of the deconvolution-based super-resolution imaging method by means of deep learning-based denoising comprises fixed cells, live cells, tissues, living animals, fungi, or fluorescent standard samples, or the like. The imaging object of the method is not limited in the embodiment of the present disclosure. For fixed cells, the embodiments of the present disclosure can achieve rapid 3D super-resolution imaging; for living cells, tissues and the like, a series of time-varying dynamic images can be obtained to reveal the rapid dynamic changes of subcellular structures.

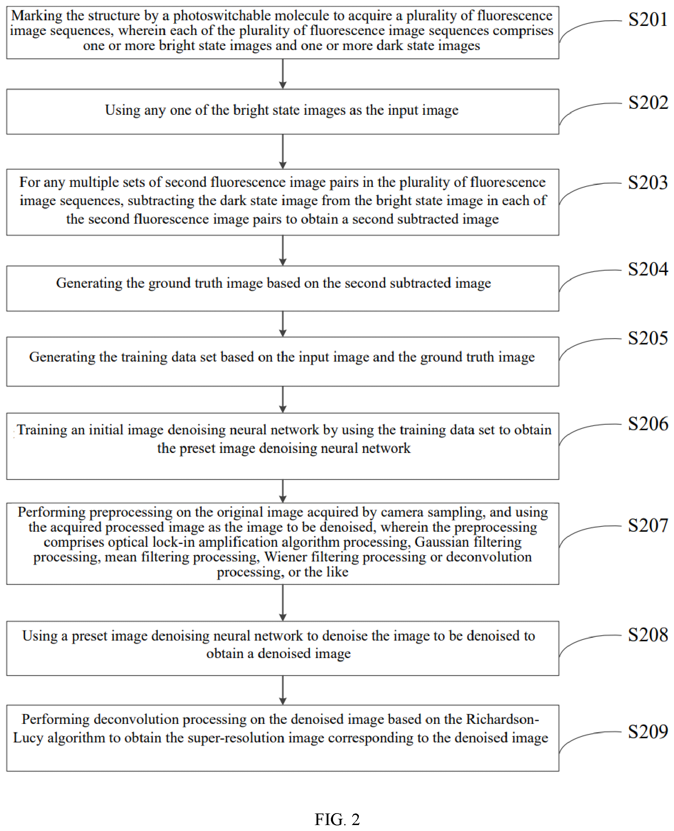

FIG. 2 is a flowchart of a deconvolution-based super-resolution imaging method by means of deep learning-based denoising according to another embodiment of the present disclosure. As shown in FIG. 2, the method includes the following steps S201 to S209.

In step S201, the structure is marked by a photoswitchable molecule to acquire a plurality of fluorescence image sequences, wherein each of the plurality of fluorescence image sequences comprises one or more bright state images and one or more dark state images. In an implementation, the fluorescence image sequences are acquired by an optical imaging technology, and the optical imaging technology comprises: wide-field fluorescence microscopic imaging technology, confocal fluorescence microscopic imaging technology, structured illumination imaging technology, single-molecule localization microscopic imaging technology, stimulated emission depletion super-resolution microscopic imaging technology, optical fluctuation super-resolution imaging technology, single-photon fluorescence imaging technology, two-photon microscopic imaging technology, multi-photon microscopic imaging technology or photoacoustic imaging technology, or the like.

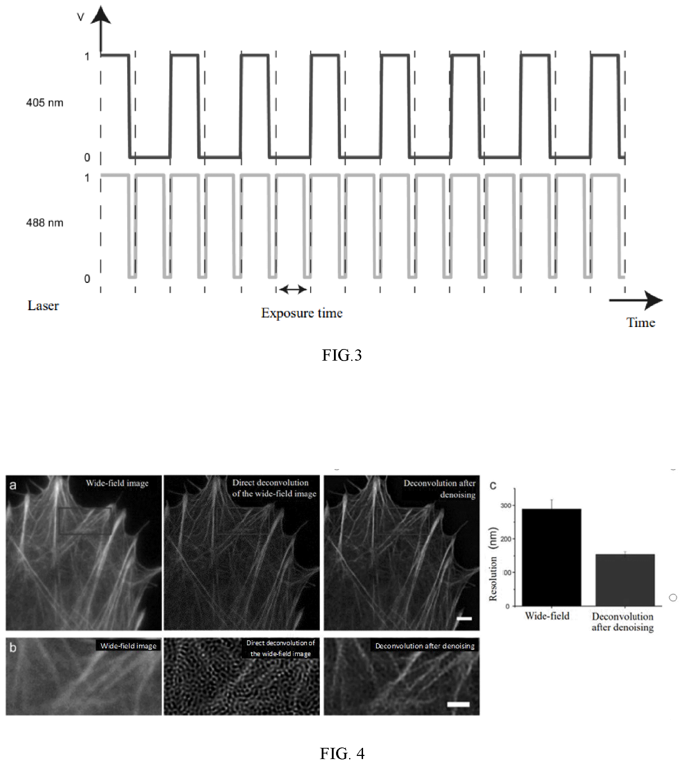

Taking the photoswitchable fluorescent protein as an example, details of acquiring a plurality of fluorescence image sequences of a target molecule are described below. First, by means of cell transfection technology (referring to the technology of introducing exogenous molecules such as DNA, RNA into eukaryotic cells), F-actin and photoswitchable fluorescent protein (RSFP) are fused and expressed in eukaryotic cells: human osteosarcoma cell line U-2 OS. After 36 hours, the cytoskeleton is fixed with a fixative, and fluorescent images are collected using a self-made or commercial fluorescent microscopy imaging platform. The model of the microscope's main body is Model A, using a 405 nm laser and a 488 nm laser, as well as a 150 $\times$, 1.45 NA objective lens; the camera model is Model B, with the pixel size of 6.5 $\mu$m. FIG. 3 is a timing diagram of laser modulation according to an embodiment of the present disclosure. Referring to the laser modulation mode shown in FIG. 3, the 405 nm laser and the 488 nm laser can be turned on simultaneously, and the 405 nm laser is turned off after starting image capture to obtain an image sequence; the 488 nm laser is turned on, and the 405 nm laser is turned on after starting image capture to obtain an image sequence. Finally, a series of fluorescence images with repeatedly switching states can be obtained, that is, a plurality of fluorescence image sequences.

In step S202, any one of the bright state images is used as the input image. In an implementation, an arbitrary set of first fluorescence image pairs may also be selected from the plurality of fluorescence image sequences, the dark state image is subtracted from the bright state image in the first fluorescence image pairs to obtain a first subtracted image; and the first subtracted image is used as the input image.

In step S203, for any multiple sets of second fluorescence image pairs in the plurality of fluorescence image sequences, the dark state image is subtracted from the bright state image in each of the second fluorescence image pairs to obtain a second subtracted image.

In step S204, the ground truth image is generated based on the second subtracted image. In an implementation, the plurality of fluorescence image sequences may also be processed by using an optical lock-in amplification algorithm to obtain the ground truth image. Wherein a signal-to-noise ratio of the input image is less than a signal-to-noise ratio of the ground truth image.

In step S205, the training data set is generated based on the input image and the ground truth image.

In step S206, an initial image denoising neural network is trained by using the training data set to obtain the preset image denoising neural network. Herein, the training data set is generated by using a photoswitching characteristic of a photoswitchable fluorescent molecule, and the fluorescent molecule is used for marking the target imaging structure of each sample in the training data set. The photoswitchable fluorescent molecule comprises a fluorescent protein with photoswitching properties, a fluorescent dye or quantum dots with photoswitching properties. The fluorescent protein with photoswitching properties responds to light modulation, has two states of a bright state and a dark state, and comprises a photoswitchable fluorescent protein, a reversibly photoswitchable fluorescent protein, or a photo-blinking fluorescent protein, and the like. The photoswitchable fluorescent protein comprises Skylan-S, rsEGFP2, Dronpa, and the like. The fluorescent dye with photoswitching properties comprises a photoswitchable dye or a photo-blinking fluorescent dye, and the like. The types of light emitted by the photoswitchable fluorescent molecule comprise blue light, green light, yellow light, red light or far infrared wavelength light, and the like. A deep learning model on which the initial image denoising neural network is based comprises a supervised model, an unsupervised model or a self-supervised model, or the like. The supervised model comprises a DnCNN model or a Noise2Clean model, or the like. The unsupervised model comprises a BM3D model or a BM4D model, or the like. The self-supervised model comprises a Deep CAD model, a Deep CAD-RT model, a Noise2Noise model, a Noise2Void model, a Self2Self model, a Self2Self+ model, a Neighbor2Neighbor model, a Noise2Fast model, a Dilated Blind-Spot Network model, a blind2unblind model or a Deep Image Prior model, or the like.

In step S207, preprocessing is performed on the original image acquired by camera sampling, and the acquired processed image is used as the image to be denoised. The preprocessing comprises optical lock-in amplification algorithm processing, Gaussian filtering processing, mean filtering processing, Wiener filtering processing or deconvolution processing, or the like. In an implementation, the original image may also be directly used as the image to be denoised. The acquired target super-resolution image may also be used as the image to be denoised. The target super-resolution image comprises an Airyscan super-resolution image, an ISM super-resolution image, an A-POD super-resolution image or an MSSR super-resolution image, or the like. The target imaging structure of the image to be denoised is marked by a fluorescent molecule. For example, the fluorescent molecule may mark the target imaging structure in the image to be denoised by means of molecular cloning. For another example, the fluorescent molecule marks the target imaging structure in the image to be denoised by binding with a target antibody. The target antibody specifically binds to the target imaging structure in the image to be denoised. In an implementation, the imaging object, that is, the target imaging structure, comprises fixed cells, live cells, tissues, living animals, fungi or fluorescent standard samples, or the like.

In step S208, a preset image denoising neural network is used to denoise the image to be denoised to obtain a denoised image. Herein, an emission spectrum of the fluorescent molecule overlaps an emission spectrum of the photoswitchable fluorescent molecule.

In step S209, deconvolution processing is performed on the denoised image based on the Richardson-Lucy algorithm to obtain the super-resolution image corresponding to the denoised image.

FIG. 4 is a comparison diagram of image processing results between direct deconvolution without denoising and deconvolution after denoising according to an embodiment of the present disclosure. Herein a corresponds to a wide-field image (upper left), an image obtained by direct deconvolution of the wide-field image (middle right), and an image obtained by deconvolution after denoising (upper right); b is a corresponding enlarged view of a (scale bars: 2 $\mu$m (a); 1 $\mu$m (b)); and c is a comparison diagram of image resolutions between direct deconvolution without denoising and deconvolution after denoising. As shown in FIG. 4, it can be seen from a and b that the image processed by deconvolution after denoising is clearer, indicating higher image resolution and fewer artifacts. It can be seen from c that the image processed by deconvolution after denoising has a smaller nm value, which indicates higher resolution. Thus, the image denoising neural network based on the photoswitching characteristic of the photoswitchable molecule can effectively remove the noise in images, and then through deconvolution processing, the spatiotemporal resolution of the denoised image is greatly improved to obtain a super-resolution image, thereby achieving large-field single-frame super-resolution imaging.

Those skilled in the art can understand that the serial numbers of the steps in the above method in the embodiments do not imply a strict order of execution, nor do they constitute any limitation on the implementation process. The performing sequence of each process is determined based on the function and internal logic thereof. It should be noted that, in practical applications, all possible embodiments described above can be combined in any combination to form a possible embodiment of the present disclosure, and details are not described herein again.

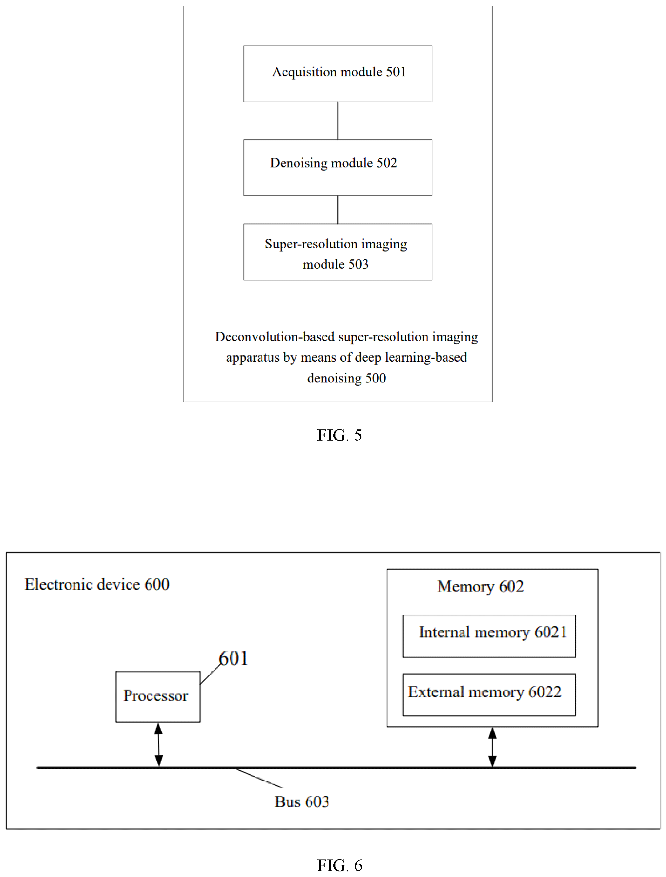

Based on the same concept, a deconvolution-based super-resolution imaging apparatus by means of deep learning-based denoising is further provided according to an embodiment of the present disclosure. FIG. 5 is a schematic structural diagram of a deconvolution-based super-resolution imaging apparatus by means of deep learning-based denoising according to an embodiment of the present disclosure. As shown in FIG. 5, the deconvolution-based super-resolution imaging apparatus by means of deep learning-based denoising 500 according to an embodiment of the present disclosure includes an acquisition module 501, a denoising module 502, and a super-resolution imaging module 503.

The acquisition module 501 is configured to acquire an image to be denoised having a target imaging structure thereof marked by a fluorescent molecule.

The denoising module 502 is configured to use a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps with an emission spectrum of the photoswitchable fluorescent molecule.

The super-resolution imaging module 503 is configured to perform deconvolution processing on the denoised image to obtain a super-resolution image corresponding to the denoised image.

In an embodiment, in the above apparatus, the photoswitchable fluorescent molecule comprises a fluorescent protein with photoswitching properties, a fluorescent dye or quantum dots with photoswitching properties.

In an embodiment, in the above apparatus, the fluorescent protein with photoswitching properties responds to light modulation, has two states of a bright state and a dark state, and comprises a photoswitchable fluorescent protein, a reversibly photoswitchable fluorescent protein, or a photo-blinking fluorescent protein, or the like.

In an embodiment, in the above apparatus, the photoswitchable fluorescent protein comprises Skylan-S, rsEGFP2, Dronpa, and the like.

In an embodiment, in the above apparatus, the fluorescent dye with photoswitching properties comprises a photoswitchable dye or a photo-blinking fluorescent dye.

In an embodiment, in the above apparatus, the types of light emitted by the photoswitchable fluorescent molecule comprise blue light, green light, yellow light, red light or far infrared wavelength light, or the like.

In an embodiment, the apparatus further comprises a network training module. The network training module is configured to:

acquire a plurality of fluorescence image sequences, wherein each of the plurality of fluorescence image sequences comprises one or more bright state images and one or more dark state images;
perform first image processing on the one or more bright state images and the one or more dark state images to obtain an input image of the plurality of fluorescence image sequences;
perform second image processing on the one or more bright state images and the one or more dark state images to obtain a ground truth image of the plurality of fluorescence image sequences, wherein a signal-to-noise ratio of the input image is less than a signal-to-noise ratio of the ground truth image; and
generate the training data set based on each input image and each ground truth image; and train an initial image denoising neural network by using the training data set to obtain the preset image denoising neural network.

In an embodiment, the network training module, when performing first image processing on the one or more bright state images and the one or more dark state images to obtain an input image of the plurality of fluorescence image sequences, is configured to:

use any one of the bright state images as the input image; or
select an arbitrary set of first fluorescence image pairs from the plurality of fluorescence image sequences, subtract the dark state image from the bright state image in the first fluorescence image pairs to obtain a first subtracted image; and use the first subtracted image as the input image.

In an embodiment, the network training module, when performing second image processing on the one or more bright state images and the one or more dark state images to obtain a ground truth image of the plurality of fluorescence image sequences, is configured to:

for any multiple sets of second fluorescence image pairs in the plurality of fluorescence image sequences, subtract the dark state image from the bright state image in each of the second fluorescence image pairs to obtain a second subtracted image; and generate the ground truth image based on the second subtracted image; or
process the plurality of fluorescence image sequences by using an optical lock-in amplification algorithm to obtain the ground truth image.

.

In an embodiment, in the network training module, a deep learning model on which the initial image denoising neural network is based comprises a supervised model, an unsupervised model or a self-supervised model, or the like. The supervised model comprises a DnCNN model or a Noise2Clean model, or the like. The unsupervised model comprises a BM3D model or a BM4D model, or the like. The self-supervised model comprises a Deep CAD model, a Deep CAD-RT model, a Noise2Noise model, a Noise2Void model, a Self2Self model, a Self2Self+ model, a Neighbor2Neighbor model, a Noise2Fast model, a Dilated Blind-Spot Network model, a blind2unblind model or a Deep Image Prior model, or the like.

In an embodiment, in the above apparatus, the acquisition module 501 is configured to:

acquire an original image, and use the original image as the image to be denoised, wherein the original image is acquired by camera sampling; or

perform preprocessing on the original image, and use the acquired processed image as the image to be denoised, wherein the preprocessing comprises optical lock-in amplification algorithm processing, Gaussian filtering processing, mean filtering processing, Wiener filtering processing or deconvolution processing, or the like; or

use the acquired target super-resolution image as the image to be denoised, wherein the target super-resolution image comprises an Airyscan super-resolution image, an ISM super-resolution image, an A-POD super-resolution image or an MSSR super-resolution image, or the like.

In an embodiment, in the above apparatus, the fluorescent molecule marks the target imaging structure in the image to be denoised by following:

the fluorescent molecule marks the target imaging structure in the image to be denoised by means of molecular cloning; or

the fluorescent molecule marks the target imaging structure in the image to be denoised by binding with a target antibody, wherein the target antibody specifically binds to the target imaging structure in the image to be denoised.

In an embodiment, in the above apparatus, the super-resolution imaging module 503 is configured to:
perform deconvolution processing on the denoised image based on the Richardson-Lucy algorithm to obtain the super-resolution image corresponding to the denoised image.

In an embodiment, in the above network training module, the fluorescence image sequences are acquired by an optical imaging technology. The optical imaging technology comprises wide-field fluorescence microscopic imaging technology, confocal fluorescence microscopic imaging technology, structured illumination imaging technology, single-molecule localization microscopic imaging technology, stimulated emission depletion super-resolution microscopic imaging technology, optical fluctuation super-resolution imaging technology, single-photon fluorescence imaging technology, two-photon microscopic imaging technology, multi-photon microscopic imaging technology or photoacoustic imaging technology, or the like.

In an embodiment, the imaging object of the apparatus comprises fixed cells, live cells, tissues, living animals, fungi or fluorescent standard samples, or the like.

It should be noted that any one of the deconvolution-based super-resolution imaging apparatuses by means of deep learning-based denoising may implement the deconvolution-based super-resolution imaging method by means of deep learning-based denoising in one-to-one correspondence, which is not described here.

Based on the same technical concept, an electronic device is further provided according to an embodiment of the present disclosure. Referring to FIG. 6, which is a schematic structural diagram of an electronic device according to an embodiment of the present disclosure. The electronic device comprises a processor 601, a memory 602, and a bus 603. The memory 602 is configured to store execution instructions, and comprises an internal memory 6021 and an external memory 6022. The internal memory 6021 herein, also referred to as main memory, is used for temporarily storing operational data in the processor 601 and data exchanged with the external memory 6022 such as a hard disk. The processor 601 exchanges data with the external memory 6022 through the internal memory 6021. When the electronic device 600 is in operation, the processor 601 communicates with the memory 602 via the bus 603, thereby causing the processor 601 to execute the following instructions:

acquire an image to be denoised having a target imaging structure thereof marked by a fluorescent molecule;

use a preset image denoising neural network to denoise the image to be denoised to obtain a denoised image, wherein a training data set for training the image denoising neural network is generated by using the photoswitching characteristic of a photoswitchable fluorescent molecule, the fluorescent molecule is used for marking the target imaging structure of each sample in the training data set, and an emission spectrum of the fluorescent molecule overlaps with an emission spectrum of the photoswitchable fluorescent molecule; and

perform deconvolution processing on the denoised image to obtain a super-resolution image corresponding to the denoised image.

The specific processing flow of the processor 601 can refer to the descriptions of the embodiments of the method, which are not described herein.

In addition, a computer-readable storage medium is further provided according to an embodiment of the present disclosure. The computer-readable storage medium stores a computer program, wherein the computer program, when executed by a processor, performs the steps of the deconvolution-based super-resolution imaging method by means of deep learning-based denoising in the embodiments of the method. The storage medium may be a volatile or non-volatile computer-readable storage medium.

A computer program product is further provided according to an embodiment of the present disclosure. The computer program product carries program codes. The instructions included in the program codes may be used to perform the steps of the deconvolution-based super-resolution imaging method by means of deep learning-based denoising in the embodiments of the method. For details, reference may be made to the above embodiments of the method, which are not repeated herein.

The computer program product may be specifically implemented in a form of hardware, software or a combination thereof. In an optional embodiment, the computer program product is specifically embodied in the form of a computer storage medium. In another optional embodiment, the computer program product is specifically embodied in the form of a software product, such as a software development kit (SDK), etc.

Those skilled in the art may clearly understand that, for convenience and brevity of description, for a detailed operation process of the foregoing system and apparatus, reference may be made to a corresponding process in the foregoing embodiments of the method, which is not repeated herein. In the embodiments of the present disclosure, it should be understood that the system, apparatus and method described herein may be implemented in other ways. The apparatus embodiments described above are only illustrative. For example, the delimitation of the units is on a basis logical function, and they may be delimited otherwise in practice. For example, multiple units or components may be combined or may be integrated into another system, or some features may be omitted or may be not implemented. In addition, the mutual coupling or direct coupling or communication connection shown or discussed above may be indirect coupling or communication connection via some interfaces, apparatuses or units, and may be electrical, mechanical or in other forms.

Units described as a discrete component may or may not be physically separated. Components shown as units may or may not be physical units, that is, the components may be located in one place or may be distributed among multiple network units. Some or all of the units may be selected according to actual requirements to achieve an objective of the technical solutions of the embodiments.

In addition, the functional units in the various embodiments according to the present disclosure may be integrated into one processing unit, or the units may separate physically, or two or more units may be integrated into one unit.

In a case that the functions are implemented in a form of a software functional unit and sold or used as an independent product, the functions may be stored in a non-volatile computer-readable storage medium executable by a processor. On a basis of such understanding, an essence or a part contributing to the conventional technology of the technical solutions, or all or a part of the technical solutions of the present disclosure, may be embodied in a form of a software product. The software product may be stored in a storage medium and comprise instructions for enabling a computer device (which may be a personal computer, a server, a network device and so on) to perform all or a part of the steps of the methods according to the embodiments of the present disclosure. The foregoing storage medium includes various media that can store program codes, for example, a USB disk, a mobile hard disk, a read-only memory (ROM), a random access memory (RAM), a magnetic disk, an optical disc.

The above are only specific embodiments of the present disclosure, but the scope of protection of the present disclosure is not limited thereto. Changes and substitutions which may be easily contemplated by those skilled in the art within the technical scope disclosed in the present disclosure shall fall within the protection scope of the present disclosure. Therefore, the scope of protection of the present disclosure shall be defined by the appended claims.

**Claims**

1. A deconvolution-based super-resolution imaging method by means of deep learning-based denoising, comprising:

   acquiring an image to be denoised having a target imaging structure thereof marked by a fluorescent molecule;
   using a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps with an emission spectrum of the photoswitchable fluorescent molecule; and
   performing deconvolution processing on the denoised image to obtain a super-resolution image corresponding to the denoised image.

2. The deconvolution-based super-resolution imaging method by means of deep learning-based denoising according to claim 1, wherein the photoswitchable fluorescent molecule comprises a fluorescent protein with photoswitching properties, a fluorescent dye or quantum dots with photoswitching properties.

3. The deconvolution-based super-resolution imaging method by means of deep learning-based denoising according to claim 2, wherein the fluorescent protein with photoswitching properties responds to light modulation, has two states of a bright state and a dark state, and comprises a photoswitchable fluorescent protein or fluorescent protein capable of entering a dark state via photobleaching.

4. The deconvolution-based super-resolution imaging method by means of deep learning-based denoising according to claim 3, wherein the photoswitchable fluorescent protein comprises Skylan-S, rsEGFP2, and Dronpa.

5. The deconvolution-based super-resolution imaging method by means of deep learning-based denoising according to claim 2, wherein the fluorescent dye with photoswitching properties comprises a photoswitchable dye or a photo-blinking fluorescent dye.

6. The deconvolution-based super-resolution imaging method by means of deep learning-based denoising according to claim 1, wherein the types of light emitted by the photoswitchable fluorescent molecule comprises blue light, green light, yellow light, red light or far infrared wavelength light.

7. The deconvolution-based super-resolution imaging method by means of deep learning-based denoising according to claim 1, wherein the preset image denoising neural network is generated according to the following steps:

acquiring a plurality of fluorescence image sequences, wherein each of the plurality of fluorescence image sequences comprises one or more bright state images and one or more dark state images;
performing first image processing on the one or more bright state images and the one or more dark state images to obtain an input image of the plurality of fluorescence image sequences;
performing second image processing on the one or more bright state images and the one or more dark state images to obtain a ground truth image of the plurality of fluorescence image sequences, wherein a signal-to-noise ratio of the input image is less than a signal-to-noise ratio of the ground truth image; and
generating the training data set based on each input image and each ground truth image; and training an initial image denoising neural network by using the training data set to obtain the preset image denoising neural network.

8. The deconvolution-based super-resolution imaging method by means of deep learning-based denoising according to claim 7, wherein the performing first image processing on the one or more bright state images and the one or more dark state images to obtain an input image of the plurality of fluorescence image sequences comprises:

using any one of the bright state images as the input image; or
selecting an arbitrary set of first fluorescence image pairs from the plurality of fluorescence image sequences, subtracting the dark state image from the bright state image in the first fluorescence image pairs to obtain a first subtracted image; and using the first subtracted image as the input image.

9. The deconvolution-based super-resolution imaging method by means of deep learning-based denoising according to claim 7, wherein the performing second image processing on the one or more bright state images and the one or more dark state images to obtain a ground truth image of the plurality of fluorescence image sequences comprises:

for any multiple sets of second fluorescence image pairs in the plurality of fluorescence image sequences, subtracting the dark state image from the bright state image in each of the second fluorescence image pairs to obtain a second subtracted image; and generating the ground truth image based on the second subtracted image; or
processing the plurality of fluorescence image sequences by using an optical lock-in amplification algorithm to obtain the ground truth image.

10. The deconvolution-based super-resolution imaging method by means of deep learning-based denoising according to claim 7, wherein a deep learning model on which the initial image denoising neural network is based comprises a supervised model, an unsupervised model or a self-supervised model;
wherein the supervised model comprises a DnCNN model or a Noise2Clean model; the unsupervised model comprises a BM3D model or a BM4D model; the self-supervised model comprises a Deep CAD model, a Deep CAD-RT model, a Noise2Noise model, a Noise2Void model, a Self2Self model, a Self2Self+ model, a Neighbor2Neighbor model, a Noise2Fast model, a Dilated Blind-Spot Network model, a blind2unblind model or a Deep Image Prior model.

11. The deconvolution-based super-resolution imaging method by means of deep learning-based denoising according to claim 1, wherein the image to be denoised is determined according to the following:

acquiring an original image, and using the original image as the image to be denoised, wherein the original image is acquired by camera sampling; or
performing preprocessing on the original image, and using the acquired processed image as the image to be denoised, wherein the preprocessing comprises optical lock-in amplification algorithm processing, Gaussian filtering processing, mean filtering processing, Wiener filtering processing or deconvolution processing; or
using the acquired target super-resolution image as the image to be denoised, wherein the target super-resolution image comprises an Airyscan super-resolution image, an ISM super-resolution image, an A-POD super-resolution image or an MSSR super-resolution image.

12. The deconvolution-based super-resolution imaging method by means of deep learning-based denoising according to claim 1, wherein the fluorescent molecule marks the target imaging structure in the image to be denoised by following:

the fluorescent molecule marks the target imaging structure in the image to be denoised by means of molecular cloning; or
the fluorescent molecule marks the target imaging structure in the image to be denoised by binding with a target antibody, wherein the target antibody specifically binds to the target imaging structure in the image to be denoised.

13. The deconvolution-based super-resolution imaging method by means of deep learning-based denoising according to claim 1, wherein the performing deconvolution processing on the denoised image to obtain a super-resolution image corresponding to the denoised image comprises:
performing deconvolution processing on the denoised image based on the Richardson-Lucy algorithm to obtain the super-resolution image corresponding to the denoised image.

14. The deconvolution-based super-resolution imaging method by means of deep learning-based denoising according to claim 7, wherein the fluorescence image sequences are acquired by an optical imaging technology, and the optical imaging technology comprises: wide-field fluorescence microscopic imaging technology, confocal fluorescence microscopic imaging technology, structured illumination imaging technology, single-molecule localization microscopic imaging technology, stimulated emission depletion super-resolution microscopic imaging technology, optical fluctuation super-resolution imaging technology, single-photon fluorescence imaging technology, two-photon microscopic imaging technology, multi-photon microscopic imaging technology or photoacoustic imaging technology.

15. The deconvolution-based super-resolution imaging method by means of deep learning-based denoising according to any one of claims 1-14, wherein the imaging object of the method comprises fixed cells, live cells, tissues, living animals, fungi or fluorescent standard samples.

16. A deconvolution-based super-resolution imaging apparatus by means of deep learning-based denoising, comprising:

an acquisition module, configured to acquire an image to be denoised having a target imaging structure thereof marked by a fluorescent molecule;
a denoising module, configured to use a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the target imaging structure of each sample in the training data set, and an emission spectrum of the fluorescent molecule overlaps with an emission spectrum of the photoswitchable fluorescent molecule; and
a super-resolution imaging module, configured to perform deconvolution processing on the denoised image to obtain a super-resolution image corresponding to the denoised image.

17. An electronic device, comprising:
a processor; and a memory configured to store computer-executable instructions, wherein the executable instructions, when executed, cause the processor to perform the steps of the method according to any one of claims 1-15.

18. A computer-readable storage medium, on which one or more programs are stored, wherein the one or more programs, when executed by an electronic device comprising a plurality of application programs, cause the electronic device to perform the steps of the method according to any one of claims 1-15.

Acquiring an image to be denoised having a structure to be imaged thereof marked by a fluorescent molecule — S101

Using a preset image denoising neural network to denoise the image to be denoised to obtain a denoised image, wherein a training data set for training the image denoising neural network is generated by using the photoswitching characteristic of a photoswitchable fluorescent molecule, the photoswitchable fluorescent molecule is used for marking the structure to be imaged of each sample in the training data set, and an emission spectrum of the fluorescent molecule overlaps with an emission spectrum of the photoswitchable fluorescent molecule — S102

Performing deconvolution processing on the denoised image to obtain a super-resolution image corresponding to the denoised image — S103

FIG. 1

Marking the structure by a photoswitchable molecule to acquire a plurality of fluorescence image sequences, wherein each of the plurality of fluorescence image sequences comprises one or more bright state images and one or more dark state images — S201

Using any one of the bright state images as the input image — S202

For any multiple sets of second fluorescence image pairs in the plurality of fluorescence image sequences, subtracting the dark state image from the bright state image in each of the second fluorescence image pairs to obtain a second subtracted image — S203

Generating the ground truth image based on the second subtracted image — S204

Generating the training data set based on the input image and the ground truth image — S205

Training an initial image denoising neural network by using the training data set to obtain the preset image denoising neural network — S206

Performing preprocessing on the original image acquired by camera sampling, and using the acquired processed image as the image to be denoised, wherein the preprocessing comprises optical lock-in amplification algorithm processing, Gaussian filtering processing, mean filtering processing, Wiener filtering processing or deconvolution processing, or the like — S207

Using a preset image denoising neural network to denoise the image to be denoised to obtain a denoised image — S208

Performing deconvolution processing on the denoised image based on the Richardson-Lucy algorithm to obtain the super-resolution image corresponding to the denoised image — S209

FIG. 2

FIG.3

FIG. 4

FIG. 5

FIG. 6

## INTERNATIONAL SEARCH REPORT

| International application No. |
| --- |
| **PCT/CN2024/108951** |

### A. CLASSIFICATION OF SUBJECT MATTER

G06T5/00(2024.01)i;  G06V20/69(2022.01)i

According to International Patent Classification (IPC) or to both national classification and IPC

### B. FIELDS SEARCHED

Minimum documentation searched (classification system followed by classification symbols)

IPC:  G06T G06V

Documentation searched other than minimum documentation to the extent that such documents are included in the fields searched

Electronic data base consulted during the international search (name of data base and, where practicable, search terms used)

CNKI, IEEE, CNABS, VEN, CNTXT, WOTXT, USTXT, EPTXT: 图像, 荧光, 开关, 去噪, 人工智能, 模型, 神经网络, 训练, 深度学习, 分辨率, image, fluorescence, switch, denoise, AI, artificial intelligence, neural network, model, train, deep learning, resolution

### C. DOCUMENTS CONSIDERED TO BE RELEVANT

| Category* | Citation of document, with indication, where appropriate, of the relevant passages | Relevant to claim No. |
| --- | --- | --- |
| X | US 2020357096 A1 (KING ABDULLAH UNIVERSITY OF SCIENCE AND TECHNOLOGY) 12 November 2020 (2020-11-12)<br>description, paragraphs 25-77 and 89-90 | 1-6, 11-13, 15-18 |
| A | CN 114549318 A (FUDAN UNIVERSITY) 27 May 2022 (2022-05-27)<br>entire document | 1-18 |
| A | CN 116740705 A (SHENZHEN UNIVERSITY) 12 September 2023 (2023-09-12)<br>entire document | 1-18 |
| A | CN 116805278 A (ZHEJIANG UNIVERSITY) 26 September 2023 (2023-09-26)<br>entire document | 1-18 |
| A | CN 111461990 A (HUAZHONG UNIVERSITY OF SCIENCE AND TECHNOLOGY) 28 July 2020 (2020-07-28)<br>entire document | 1-18 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 October 2024** | **31 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108951**

| Patent document cited in search report | | | Publication date (day/month/year) | Patent family member(s) | | | Publication date (day/month/year) |
|---|---|---|---|---|---|---|---|
| US | 2020357096 | A1 | 12 November 2020 | US | 2022343465 | A1 | 27 October 2022 |
| | | | | US | 11836895 | B2 | 05 December 2023 |
| | | | | US | 11403735 | B2 | 02 August 2022 |
| | | | | WO | 2019145767 | A1 | 01 August 2019 |
| CN | 114549318 | A | 27 May 2022 | None | | | |
| CN | 116740705 | A | 12 September 2023 | None | | | |
| CN | 116805278 | A | 26 September 2023 | None | | | |
| CN | 111461990 | A | 28 July 2020 | None | | | |

Form PCT/ISA/210 (patent family annex) (July 2022)

**REFERENCES CITED IN THE DESCRIPTION**

**Patent documents cited in the description**

- CN 202311839953